# EUROPEAN PATENT APPLICATION

(11) **EP 4 696 661 A1**
(43) Date of publication of application: **18.02.2026**
(21) Application number: 24788503.1
(22) Date of filing: 13.03.2024
(51) Int. Cl.: C03B 5/027, C03B 5/24

(54) **METHOD AND DEVICE FOR MANUFACTURING GLASS ARTICLE**

(30) Priority: 11.04.2023 JP 2023064199
(71) Applicant: Nippon Electric Glass Co., Ltd., Otsu-shi, Shiga 520-8639 (JP)
(72) Inventor: FUJIWARA, Masaki, Otsu-shi, Shiga 520-8639 (JP); TAKAGI, Keiji, Otsu-shi, Shiga 520-8639 (JP); MORI, Keiichi, Otsu-shi, Shiga 520-8639 (JP); TAKAHASHI, Fumihiro, Otsu-shi, Shiga 520-8639 (JP)
(74) Representative: Tetzner, Michael
(86) International application number: PCT/JP2024/009810
(87) International publication number: WO 2024/214473

(57) **Abstract**

Provided is a manufacturing method for a glass article, including a supplying step (S1), a melting step (S2), and a discharging step (S3). A liquid surface (LS) of a molten glass (Gm) includes: a covered portion (LS1) at which the liquid surface is covered with a covering layer (Gx); and an exposed portion (LS2) at which the liquid surface is exposed. In the melting step (S2), an area of the exposed portion (LS2) of the molten glass (Gm) is controlled by changing an insertion length (L2) of an electrode (3b) configured to be inserted from a bottom wall (1a) of a melting furnace (1) into the melting furnace (1), in accordance with the area of the exposed portion (LS2).

## Description

### Technical Field

The present invention relates to a manufacturing method and a manufacturing apparatus for a glass article.

### Background Art

A manufacturing method for a glass article such as a glass fiber or a glass sheet includes, for example, a supplying step of supplying a glass raw material from an upstream side of a melting furnace onto a molten glass contained in the melting furnace, a melting step of melting the glass raw material to obtain the molten glass, and a discharging step of discharging the molten glass from a downstream side of the melting furnace.

In the melting step, for example, in some cases, the glass raw material is melted by heating (through application of a current) with an electrode immersed in the molten glass, to thereby obtain the molten glass. When heating with the electrode is used in this way, from the viewpoint of improving thermal efficiency of the melting furnace, a liquid surface of the molten glass is sometimes covered with a covering layer derived from the glass raw material to suppress heat dissipation from the molten glass (see, for example, Patent Literature 1). Here, the covering layer includes a batch layer formed from the glass raw material, and a foam layer formed along with melting of the glass raw material.

### Citation List

Patent Literature 1: WO 2019/054385 A1

### Summary of Invention

### Technical Problem

In a related-art manufacturing method for a glass article, a foam layer acts as a heat insulating layer. Thus, when a thickness of the foam layer becomes larger, heat is hardly transferred from a molten glass to a batch layer, resulting in that melting of a glass raw material is inhibited. Accordingly, when the thickness of the foam layer becomes excessively large, the supplied glass raw material is deposited on the foam layer. As a result, a situation arises where supply of the glass raw material is stopped. In order to prevent this situation, it is important that, in a liquid surface of a molten glass, an exposed portion at which the liquid surface is exposed without being covered with the foam layer is formed, and an area of the exposed portion is kept constant.

The present invention has been made in view of the above-mentioned circumstances, and has a technical object to suitably control an area of a portion, which is exposed from a foam layer, of a liquid surface of a molten glass, in a melting step.

### Solution to Problem

(1) According to the present invention devised in order to solve the problems described above, there is provided a manufacturing method for a glass article, comprising: a supplying step of supplying a glass raw material from a front wall side of a melting furnace into the melting furnace; a melting step of heating the glass raw material with an electrode configured to be inserted from a bottom wall of the melting furnace into the melting furnace, to produce a molten glass; and a discharging step of discharging the molten glass from a rear wall side of the melting furnace. A liquid surface of the molten glass comprises: a covered portion at which the liquid surface is covered with a covering layer comprising a batch layer and a foam layer; and an exposed portion at which the liquid surface is exposed. In the melting step, an area of the exposed portion is controlled by changing an insertion length of the electrode in accordance with the area of the exposed portion.

According to such a configuration, with the change in the insertion length of the electrode in the melting step, a temperature in the vicinity of the liquid surface of the molten glass can be adjusted. Accordingly, an area of the foam layer in the covering layer and the area of the liquid surface at the exposed portion of the molten glass can be efficiently controlled, resulting in that the molten glass in the melting furnace can be brought into a state of being suitable for manufacturing of a glass article.

(2) In the manufacturing method for a glass article according to the above-mentioned item (1), in the melting step, when the area of the exposed portion has decreased, the insertion length of the electrode may be increased.

As described above, in the melting step, the foam layer in the covering layer may increase so that the area of the exposed portion of the molten glass decreases. In this case, with the increase in the insertion length of the electrode, a distal end portion of the electrode can be brought closer to the liquid surface of the molten glass. Accordingly, the temperature in the vicinity of the liquid surface is increased, thereby being capable of causing a part of the foam layer in the covering layer to disappear.

(3) In the manufacturing method for a glass article according to the above-mentioned item (2), the electrode comprises: a first electrode that is arranged on the front wall side; and a second electrode that is arranged on the rear wall side, and, in the melting step, when the area of the exposed portion has decreased, the insertion length of the second electrode may be increased.

According to such a configuration, with the increase in the insertion length of the second electrode located on the rear wall side, the foam layer on the rear wall side can be caused to disappear. Accordingly, the area of the exposed portion can be increased.

(4) In the manufacturing method for a glass article according to the above-mentioned item (3), the insertion length of the second electrode may be larger than the insertion length of the first electrode.

According to such a configuration, with a distal end portion of the second electrode being positioned higher than a distal end portion of the first electrode, the molten glass in the vicinity of the liquid surface on the rear wall side can be effectively heated, and hence it is advantageous for controlling the area of the exposed portion.

(5) In the manufacturing method for a glass article according to any one of the above-mentioned items (1) to (4), the electrode comprises a plurality of the first electrodes and a plurality of the second electrodes, and the number of the second electrode per unit area in the bottom wall may be larger than the number of the first electrode per unit area in the bottom wall.

According to such a configuration, with the number of the second electrode provided on the rear wall side being set to be larger than the number of the electrode provided on the front wall side, the area of the exposed portion can be effectively controlled.

(6) In the manufacturing method for a glass article according to any one of the above-mentioned items (1) to (5), the electrode comprises: a first electrode that is arranged on the front wall side; and a second electrode that is arranged on the rear wall side, and the insertion length of the second electrode may be from 60% to 80% of a height of the liquid surface at the exposed portion.

According to such a configuration, with the insertion length of the second electrode being set to fall within the above-mentioned range, the molten glass in the vicinity of the liquid surface on the rear wall side can be heated to a suitable temperature, and hence the area of the exposed portion can be effectively controlled.

(7) In the manufacturing method for a glass article according to any one of the above-mentioned items (1) to (6), in the melting step, the area of the exposed portion may be controlled so that the area of the exposed portion is from 5% to 50% of a total area of the liquid surface of the molten glass.

According to such a configuration, with the area of the exposed portion being set to fall within the above-mentioned range in the melting step, the melting furnace can be stably operated.

(8) According to the present invention devised in order to solve the problems described above, there is provided a manufacturing apparatus for a glass article, comprising a melting furnace configured to heat a glass raw material to produce a molten glass. The melting furnace comprises: a front wall having a supply port through which the glass raw material is allowed to be supplied; a bottom wall having an electrode configured to heat the glass raw material; and a rear wall having a discharge port through which the molten glass is allowed to be discharged. The electrode is configured to be inserted from the bottom wall into an inside of the melting furnace. The electrode comprises: a first electrode that is arranged on the front wall side; and a second electrode that is arranged on the rear wall side. An insertion length of the second electrode is larger than an insertion length of the first electrode.

According to such a configuration, with the insertion length of the second electrode located on the rear wall side of the melting furnace being set to be larger than the insertion length of the first electrode located on the front wall side, a distal end portion of the second electrode can be positioned higher than a distal end portion of the first electrode. Accordingly, the vicinity of the liquid surface of the molten glass can be effectively heated on the rear wall side so that the area of a portion, which is exposed from the foam layer, of the liquid surface of the molten glass can be efficiently controlled. As a result, the molten glass in the melting furnace can be brought into a state of being suitable for manufacturing of the glass article.

(9) In the manufacturing apparatus for a glass article according to the above-mentioned item (8), the electrode comprises a plurality of the first electrodes and a plurality of the second electrodes, and the number of the second electrode per unit area in the bottom wall may be larger than the number of the first electrode per unit area in the bottom wall.

According to such a configuration, with the number of the second electrode provided on the rear wall side being set to be larger than the number of the electrode provided on the front wall side, the area of the portion, which is exposed from the foam layer, of the liquid surface of the molten glass can be effectively controlled.

### Advantageous Effects of Invention

According to the present invention, it is possible to suitably control an area of a portion, which is exposed from a foam layer, of a liquid surface of a molten glass, in a melting step.

### Brief Description of Drawings

FIG. 1 is a sectional view for illustrating a manufacturing apparatus for a glass article according to a first embodiment of the present invention.
FIG. 2 is a flowchart for illustrating a manufacturing method for a glass article.
FIG. 3 is a sectional view for illustrating part of the manufacturing method for a glass article.
FIG. 4 is a sectional view for illustrating a manufacturing apparatus for a glass article according to a second embodiment of the present invention.

### Description of Embodiments

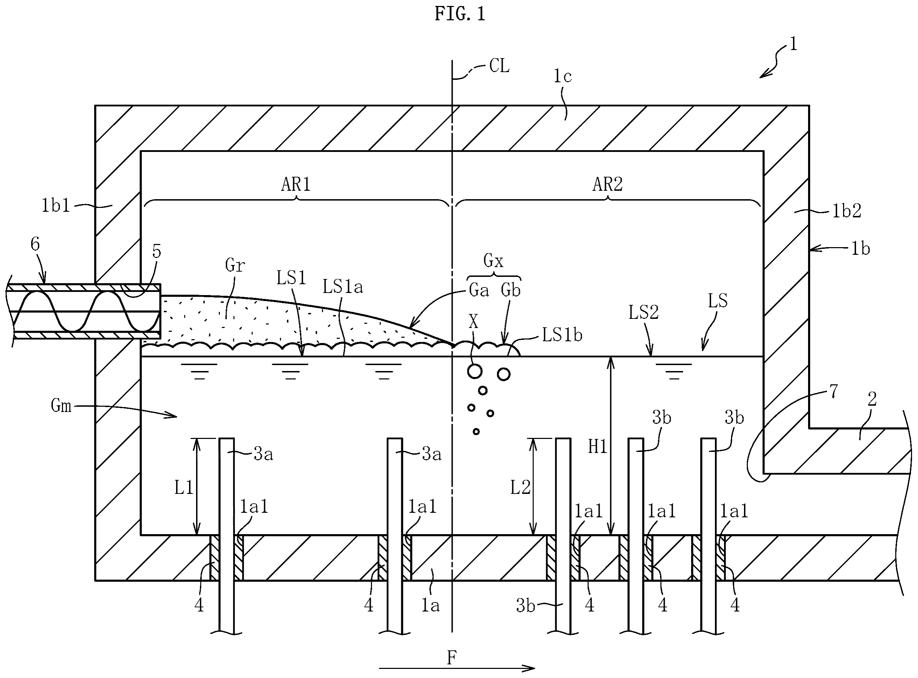

Now, embodiments of the present invention are described with reference to the drawings. FIG. 1 to FIG. 3 show a manufacturing apparatus and a manufacturing method for a glass article according to a first embodiment of the present invention.

As illustrated in FIG. 1, the manufacturing apparatus for a glass article comprises a melting furnace 1, a feeder 2, and a forming device (not shown).

As illustrated in FIG. 1, the melting furnace 1 comprises a bottom wall 1a, a side wall 1b, and a ceiling wall 1c, and those constituent elements 1a to 1c define an internal space for containing a molten glass Gm. The side wall 1b comprises a front wall 1b1 located on an upstream side, and a rear wall 1b2 located on a downstream side. In addition thereto, the side wall 1b comprises a pair of lateral walls (not shown) that couples the front wall 1b1 and the rear wall 1b2 to each other.

The melting furnace 1 is configured to supply a glass raw material Gr and melt the glass raw material Gr by heating to form the molten glass Gm. The glass raw material Gr may comprise cullet in addition to a natural raw material and a chemical raw material. When the glass article is a glass fiber, the molten glass Gm can be E-glass, NE-glass, C-glass, S-glass, T-glass, D-glass, or A-glass. When the glass article is a glass substrate for a display or is a glass tube, the molten glass Gm can be alkali-free glass. Further, when the glass article is a cover glass for a display or the like, the glass article can be aluminosilicate glass for chemical strengthening.

The bottom wall 1a of the melting furnace 1 has a plurality of rod-shaped electrodes 3a and 3b mounted to the bottom wall 1a. The electrodes 3a and 3b are each made of, for example, molybdenum (Mo). Under a state in which the electrodes 3a and 3b have been immersed in the molten glass Gm, a voltage is applied between a pair of electrodes or a set of three electrodes among the electrodes 3a and 3b, to thereby heat the molten glass Gm located mainly between the electrodes through application of a current to melt the glass raw material Gr.

The space inside the melting furnace 1 comprises a first region AR1 on the upstream side (front wall 1b1 side), and a second region AR2 on the downstream side (rear wall 1b2 side). The first region AR1 and the second region AR2 are divided by a center line CL that divides the melting furnace 1 into two parts, that is, the upstream side and the downstream side. The center line CL is an imaginary line drawn along an up-down direction at an intermediate position between the front wall 1b1 and the rear wall 1b2.

The electrodes 3a and 3b comprise a plurality of first electrodes 3a arranged in the first region AR1 and a plurality of second electrodes 3b arranged in the second region AR2. In this embodiment, the number of the second electrodes 3b per unit area of the bottom wall 1a in the second region AR2 is larger than the number of the first electrodes 3a per unit area of the bottom wall 1a in the first region AR1. The number of the second electrodes 3b per unit area of the bottom wall 1a in the second region AR2 may be the same as the number of the first electrodes 3a per unit area of the bottom wall 1a in the first region AR1.

The electrodes 3a and 3b are respectively inserted into insertion holes 1a1 formed in the bottom wall 1a, under a state of being held in cylindrical electrode holders 4 each comprising a cooling mechanism (not shown). That is, the electrode holders 4 are held in the bottom wall 1a, and the electrodes 3a and 3b are held in the electrode holders 4. Under this state, insertion lengths L1 and L2 of the electrodes 3a and 3b to be inserted into the melting furnace 1 can be changed. The number or arrangement positions of the electrodes 3a and 3b can be appropriately changed depending on a size of the melting furnace 1, or the like.

In this embodiment, a combustion heating part, such as a burner for melting the glass raw material Gr is not provided in an upper space above a liquid surface LS of the molten glass Gm in the melting furnace 1. In this embodiment, a so-called all-electric melting method is adopted in which the glass raw material Gr is melted only by heating through application of a current with the electrodes 3a and 3b in a melting step to be described later. When such an all-electric melting method is adopted, a temperature of the ceiling wall 1c of the melting furnace 1 significantly decreases, and hence heat dissipation from the ceiling wall 1c can be significantly reduced, resulting in that energy efficiency can be increased. Further, fossil fuels such as natural gas are not used, and hence CO₂ emission can be significantly reduced. A burner may be used in a start-up step before starting the melting step (step of increasing a temperature of the melting furnace 1 from room temperature to a temperature at which the glass raw material Gr can be melted).

A supply port 5 for supplying the glass raw material Gr is formed in the front wall 1b1 of the melting furnace 1. A supply device 6 is provided at this supply port 5. In this embodiment, the supply device 6 is a screw feeder. The supply device 6 may be any other publicly-known supply device such as a pusher or a vibrating feeder. The number or arrangement position of the supply device 6 can be appropriately changed depending on the size of the melting furnace 1, or the like.

A discharge port 7 for discharging the molten glass Gm is formed in the rear wall 1b2 of the melting furnace 1. The feeder 2 is connected to this discharge port 7, and the molten glass Gm is supplied sequentially from the melting furnace 1 to the feeder 2. The feeder 2 may be connected to the forming device (not shown). In the melting furnace 1 as described above, the molten glass Gm flows along the flowing direction F from the front wall 1b1 toward the rear wall 1b2.

The feeder 2 is used to transfer the molten glass Gm, which has been formed in the melting furnace 1, to the forming device on the downstream side of the feeder 2. The feeder 2 comprises, as required, for example, a transfer path for transferring the molten glass Gm, a fining chamber for subjecting the molten glass Gm to fining treatment, and a homogenization chamber (stirring chamber) for subjecting the molten glass Gm to stirring treatment by a stirrer.

The forming device (not shown) forms a glass article from the molten glass Gm supplied by the feeder 2. In this embodiment, the glass article to be manufactured is a glass fiber.

The glass raw material Gr supplied by the supply device 6 from the front wall 1b1 side flows toward the rear wall 1b2 side on the molten glass Gm having a high temperature, which is heated through application of a current with the electrodes 3a and 3b, to thereby form a batch line. In a process in which the glass raw material Gr flows in the batch line, the glass raw material Gr flows downward while the temperature of the glass raw material Gr is being increased due to the heat of the molten glass Gm, to become the molten glass Gm. Accordingly, the molten glass Gm is continuously produced. A part of the liquid surface LS of the molten glass Gm is covered with a covering layer Gx. The covering layer Gx comprises a batch layer Ga formed from the glass raw material Gr, and a foam layer Gb formed along with melting of the glass raw material Gr. A part or an entirety of the batch layer Ga may be formed on the foam layer Gb.

The foam layer Gb is formed along with generation of a gas X such as a carbon oxide gas (CO or CO₂), an O₂ gas, or an SO₂ gas due to the glass raw material Gr. Heat dissipation from the molten glass Gm can be suppressed by covering a part of the liquid surface LS of the molten glass Gm with the covering layer Gx as described above.

As a result, a temperature of the molten glass Gm can be reliably regulated, and hence energy saving can be achieved.

The liquid surface LS of the molten glass Gm comprises: a covered portion LS1 at which the liquid surface is covered with the covering layer Gx; and an exposed portion LS2 at which the liquid surface is exposed without being covered with the covering layer Gx. A portion of the liquid surface LS, which is located in the first region AR1 and on the front wall 1b1 side of the second region AR2, is, for example, mostly the covered portion LS1, but the exposed portion LS2 may be formed in a gap between batch lines or a gap between the batch line and the lateral wall. The exposed portion LS2 is in a state of a mirror surface with almost no scattering of light, and is distributed mainly on the rear wall 1b2 side of the second region AR2.

Now, description is made of a method of manufacturing a glass fiber being a glass article, using a manufacturing apparatus having the configuration described above.

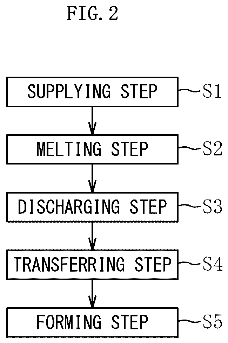

As illustrated in FIG. 2, this method comprises a supplying step S1, a melting step S2, a discharging step S3, a transferring step S4, and a forming step S5.

In the supplying step S1, the supply device 6 located on the upstream side of the melting furnace 1 supplies the glass raw material Gr from the supply port 5 in the front wall 1b1 into the melting furnace 1. The glass raw material Gr is continuously supplied onto the molten glass Gm contained in the melting furnace 1. The glass raw material Gr serves as the covering layer Gx until the glass raw material Gr is melted.

In the melting step S2, the glass raw material Gr is melted by heating with the electrodes 3a and 3b immersed in the molten glass Gm, thereby obtaining the molten glass Gm. At this time, a temperature of heating by the electrodes 3a and 3b and the temperature of the upper space above the liquid surface LS of the molten glass Gm in the melting furnace 1 are adjusted so that the covering layer Gx comprising the batch layer Ga and the foam layer Gb is formed on the liquid surface LS (covered portion LS1) of the molten glass Gm.

An area E of the exposed portion LS2 of the molten glass Gm is preferably 5% or more and 50% or less, more preferably 10% or more and 30% or less of a total area B of the liquid surface LS of the molten glass Gm. When a ratio of the area E of the exposed portion LS2 to the total area B of the liquid surface LS of the molten glass Gm is less than 5%, a thickness and an area C of the foam layer Gb in the covering layer Gx are relatively large, resulting in that melting of the glass raw material Gr in the batch layer Ga may be inhibited. When the ratio of the area E of the exposed portion LS2 to the total area B of the liquid surface LS of the molten glass Gm is more than 50%, thermal energy released from the exposed portion LS2 relatively increases, resulting in that energy saving may be inhibited. The total area B of the liquid surface LS of the molten glass Gm corresponds to an area of a region surrounded by the side wall 1b (front wall 1b1, rear wall 1b2, and lateral walls) of the melting furnace 1.

An area D of a portion LS1a, which is covered with the batch layer Ga, of the liquid surface LS of the molten glass Gm in the melting furnace 1 is preferably 50% or more and 90% or less, more preferably 70% or more and 90% or less of the area C of the covered portion LS1 of the molten glass Gm in the melting furnace 1.

In the melting step S2 of this embodiment, an image of a state of the liquid surface LS of the molten glass Gm is picked up by an image pickup device (not shown). After that, image analysis is performed by a computer based on the picked-up image. Through the image analysis, the area of each of the covering layer Gx (covered portion LS1) and the exposed portion LS2 of the molten glass Gm that are comprised in the image is calculated. In the image analysis, the ratio of the area of the covering layer Gx (batch layer Ga and foam layer Gb) to the total area of the liquid surface LS of the molten glass Gm, and the ratio of the area of the exposed portion LS2 to the total area of the liquid surface LS of the molten glass Gm are calculated.

In the melting step S2, the area of the exposed portion LS2 of the molten glass Gm is controlled so as to fall within a predetermined range by changing the insertion lengths L1 and L2 of the electrodes 3a and 3b inserted from the bottom wall 1a into the melting furnace 1, in accordance with the area of the exposed portion LS2. At the time of changing the insertion lengths L1 and L2 of the electrodes 3a and 3b, it is preferred that the insertion length L2 of the second electrodes 3b be changed. Further, it is preferred that the insertion lengths L1 and L2 of the electrodes 3a and 3b be changed so that the area of the exposed portion LS2 is 5% or more and 50% or less of the total area of the liquid surface LS of the molten glass Gm.

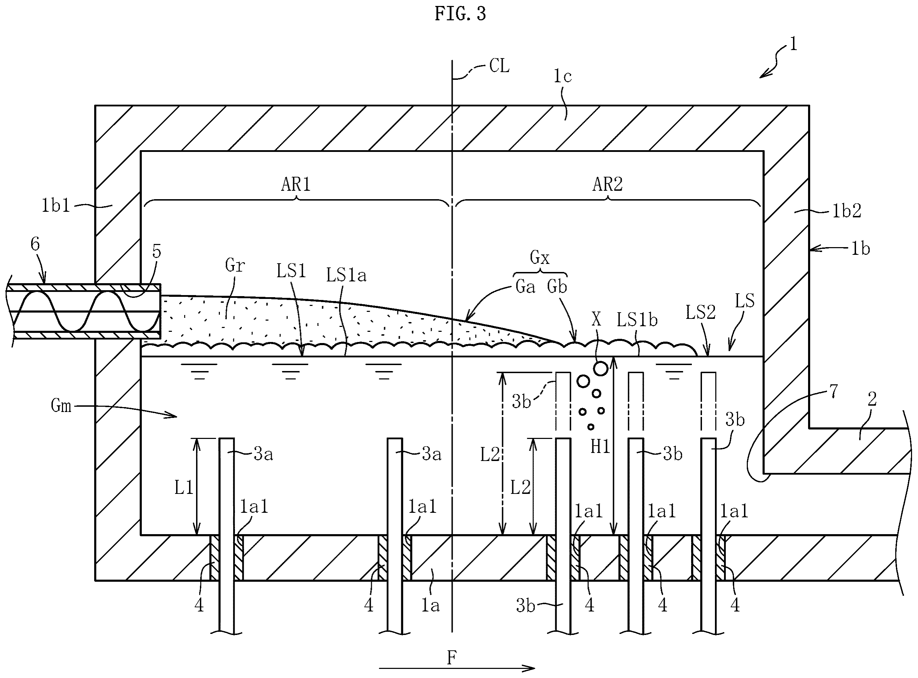

For example, in the melting step S2, when the thickness and the area of the foam layer Gb in the covering layer Gx increase, the area of the exposed portion LS2 of the molten glass Gm relatively decreases. In this case, as indicated by two-dot chain lines in FIG. 3, the insertion length L2 of the second electrodes 3b is increased.

When the insertion length L2 of the second electrodes 3b is to be increased, a lower portion of each of the second electrodes 3b, which is located outside the melting furnace 1, is pushed upward using a lifting device such as a jack, on a lower side of the bottom wall 1a of the melting furnace 1.

When the insertion length L2 of the second electrodes 3b is increased, a distal end portion of each of the second electrodes 3b is brought closer to the exposed portion LS2 of the molten glass Gm. According to findings of the inventors of the present invention, it has been confirmed that, in the melting step S2, in the molten glass located between electrodes among the electrodes 3a and 3b, a portion of such a molten glass, which is located at a height of the distal end portions of the electrodes, has the highest temperature. With the distal end portion of each of the second electrodes 3b being brought closer to the exposed portion LS2, the temperature of the molten glass in the vicinity of the liquid surface on the rear wall 1b2 side is increased. Accordingly, a part of the foam layer Gb formed on the rear wall 1b2 side disappears so that the area of the foam layer Gb decreases, resulting in that the area of the exposed portion LS2 increases. As described above, the exposed portion LS2 is distributed mainly on the rear wall 1b2 side. Thus, when the insertion length L2 of the second electrodes 3b is changed, the area of the exposed portion LS2 can be effectively increased or decreased with excellent responsiveness.

In the melting step S2, when the area of the exposed portion LS2 of the molten glass Gm has excessively increased, in order to decrease the area of the exposed portion LS2, for example, the insertion length L2 of the second electrodes 3b is decreased. In this case, each of the second electrodes 3b is moved downward by an own weight of the second electrode 3b or a pressure in the molten glass Gm.

In the discharging step S3, the molten glass Gm is continuously discharged from the discharge port 7 in the rear wall 1b2 on the downstream side of the melting furnace 1, and the molten glass Gm is supplied to the feeder 2.

In the transferring step S4, the molten glass Gm formed in the melting furnace 1 is transferred to the forming device by the feeder 2.

In the forming step S5, a glass fiber as a glass article is formed from the molten glass Gm by the forming device.

With the manufacturing apparatus and the manufacturing method for a glass article according to this embodiment described above, in the melting step S2, the insertion length L2 of the electrodes 3b is changed in accordance with the area of the exposed portion LS2 of the molten glass Gm. As a result, the temperature in the vicinity of the liquid surface of the molten glass Gm can be adjusted.

Accordingly, the thickness and the area of the foam layer Gb in the covering layer Gx can be efficiently controlled. Thus, the area of the exposed portion LS2 of the molten glass Gm is adjusted so that the covering layer Gx and the molten glass Gm in the melting furnace 1 can be brought into a state of being suitable for manufacturing of a glass article.

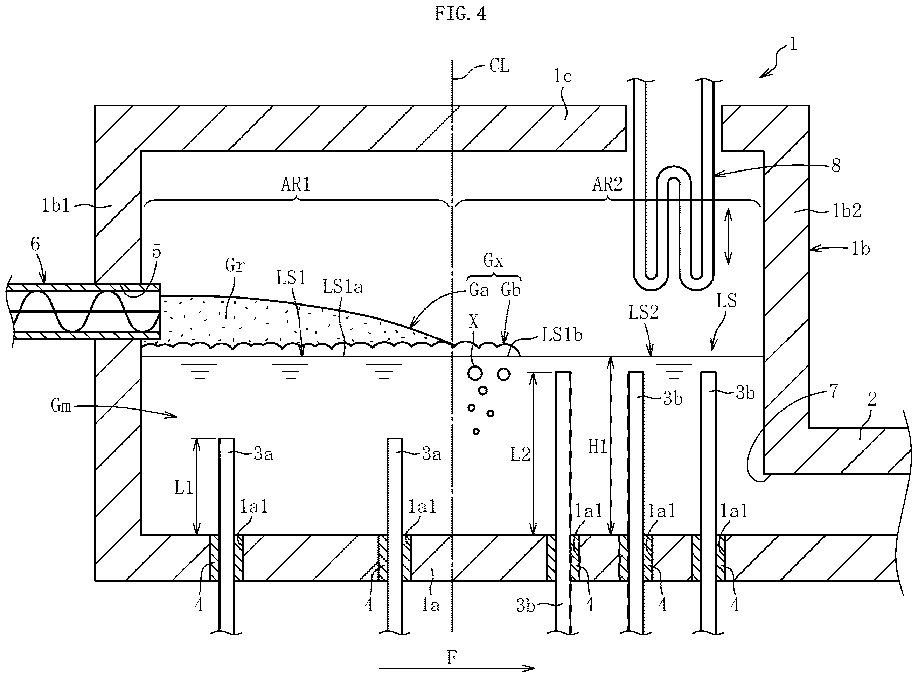

FIG. 4 shows a manufacturing apparatus and a manufacturing method for a glass article according to a second embodiment of the present invention. A melting furnace 1 in this embodiment is configured by adding a heater 8 to the melting furnace 1 described in the above-mentioned first embodiment.

The heater 8 is inserted from a ceiling wall 1c into an inside of the melting furnace 1 in the second region AR2 of the melting furnace 1. The heater 8 is configured so as to be movable in the up-down direction. In this embodiment, in the melting step S2, the exposed portion LS2 of the molten glass Gm on the rear wall 1b2 side is heated with the second electrodes 3b and the heater 8. As a result, the area of the exposed portion LS2 can be suitably controlled.

For example, a resistance heater or an induction heater can be used as the heater 8. When a plurality of heaters 8 are provided, resistance heaters and induction heaters may be used in combination. For example, SiC heaters, molybdenum disilicide heaters, and metal heaters can be used as resistance heaters. For example, heaters of an iron alloy, a chrome alloy, a nickel alloy, an aluminum alloy, platinum, a platinum alloy, and tungsten can be used as metal heaters.

The present invention is not limited to the configurations of the above-mentioned embodiments. In addition, the action and effect of the present invention are not limited to those described above. The present invention may be modified in various forms within the range not departing from the gist of the present invention.

In the embodiments described above, description has been given of the example in which only the insertion length L2 of the second electrodes 3b is changed in the melting step S2, but the present invention is not limited to this configuration. In the melting step S2, in addition to the change in the insertion length L2 of the second electrodes 3b, the insertion length L1 of the first electrodes 3a may also be changed, or the insertion length L1 of the first electrodes 3a may be changed instead of the change in the insertion length L2 of the second electrodes 3b. When the insertion length L1 of the first electrodes 3a is changed in addition to the change in the insertion length L2 of the second electrodes 3b, the thickness and the area of the foam layer Gb can be further increased or decreased.

In the embodiments described above, the insertion length L2 of the second electrodes 3b is set to be larger than the insertion length L1 of the first electrodes 3a, but the insertion length L2 of the second electrodes 3b may be set to be the same as the insertion length L1 of the first electrodes 3a.

When the insertion length L2 of the second electrodes 3b is set to be larger than the insertion length L1 of the first electrodes 3a, the insertion length L2 of the second electrodes 3b is preferably 50% or more and 99% or less, more preferably 60% or more and 80% or less of a height H1 of the exposed portion LS2 of the molten glass Gm. Further, a difference ΔL (ΔL=L2-L1) is preferably 1% or more and 20% or less, more preferably 2% or more and 15% or less, still more preferably 3% or more and 10% or less of the height H1.

When the insertion length L2 of the second electrodes 3b is set to be the same as the insertion length L1 of the first electrodes 3a, the insertion length L2 of the second electrodes 3b is preferably 50% or more and 99% or less, more preferably 60% or more and 80% or less of the height H1 of the exposed portion LS2 of the molten glass Gm.

In the embodiments described above, the first region AR1 and the second region AR2 in the melting furnace 1 are set to have the same size, but the present invention is not limited to this configuration. The second region AR2 may be smaller than the first region AR1, or may be larger than the first region AR1.

### Reference Signs List

- 1: melting furnace
- 1a: bottom wall
- 1a1: insertion hole
- 1b1: front wall
- 1b2: rear wall
- 3a: first electrode
- 3b: second electrode
- Ga: batch layer
- Gb: foam layer
- Gm: molten glass
- Gr: glass raw material
- Gx: covering layer
- H1: height of exposed portion
- L1: insertion length of first electrode
- L2: insertion length of second electrode
- LS: liquid surface of molten glass
- LS1: covered portion
- LS2: exposed portion
- S1: supplying step
- S2: melting step
- S3: discharging step

## Claims

1. A manufacturing method for a glass article, comprising:
a supplying step of supplying a glass raw material from a front wall side of a melting furnace into the melting furnace;
a melting step of heating the glass raw material with an electrode configured to be inserted from a bottom wall of the melting furnace into the melting furnace, to produce a molten glass; and
a discharging step of discharging the molten glass from a rear wall side of the melting furnace,
wherein a liquid surface of the molten glass comprises:
a covered portion at which the liquid surface is covered with a covering layer comprising a batch layer and a foam layer; and
an exposed portion at which the liquid surface is exposed, and
wherein, in the melting step, an area of the exposed portion is controlled by changing an insertion length of the electrode in accordance with the area of the exposed portion.

2. The manufacturing method for a glass article according to claim 1, wherein, in the melting step, when the area of the exposed portion has decreased, the insertion length of the electrode is increased.

3. The manufacturing method for a glass article according to claim 2,
wherein the electrode comprises:
a first electrode that is arranged on the front wall side; and
a second electrode that is arranged on the rear wall side, and
wherein, in the melting step, when the area of the exposed portion has decreased, the insertion length of the second electrode is increased.

4. The manufacturing method for a glass article according to claim 3, wherein the insertion length of the second electrode is larger than the insertion length of the first electrode.

5. The manufacturing method for a glass article according to claim 3 or 4,
wherein the electrode comprises a plurality of the first electrodes and a plurality of the second electrodes, and
wherein the number of the second electrode per unit area in the bottom wall is larger than the number of the first electrode per unit area in the bottom wall.

6. The manufacturing method for a glass article according to claim 3 or 4, wherein the insertion length of the second electrode is from 50% to 99% of a height of the liquid surface at the exposed portion.

7. The manufacturing method for a glass article according to any one of claims 1 to 4, wherein, in the melting step, the area of the exposed portion is controlled so that the area of the exposed portion is from 5% to 50% of a total area of the liquid surface of the molten glass.

8. A manufacturing apparatus for a glass article, comprising a melting furnace configured to heat a glass raw material to produce a molten glass,
wherein the melting furnace comprises:
a front wall having a supply port through which the glass raw material is allowed to be supplied;
a bottom wall having an electrode configured to heat the glass raw material; and
a rear wall having a discharge port through which the molten glass is allowed to be discharged,
wherein the electrode is configured to be inserted from the bottom wall into an inside of the melting furnace,
wherein the electrode comprises:
a first electrode that is arranged on the front wall side; and
a second electrode that is arranged on the rear wall side, and
wherein an insertion length of the second electrode is larger than an insertion length of the first electrode.

9. The manufacturing apparatus for a glass article according to claim 8,
wherein the electrode comprises a plurality of the first electrodes and a plurality of the second electrodes, and
wherein the number of the second electrode per unit area in the bottom wall is larger than the number of the first electrode per unit area in the bottom wall.
